(19) Europäisches Patentamt / European Patent Office / Office européen des brevets

(11) **EP 3 702 597 B1**

(12) **EUROPEAN PATENT SPECIFICATION**

(45) Date of publication and mention of the grant of the patent:
**26.04.2023 Bulletin 2023/17**

(21) Application number: **18870605.5**

(22) Date of filing: **26.10.2018**

(51) International Patent Classification (IPC):
$F02B\ 25/04^{(2006.01)}$    $F02B\ 75/04^{(2006.01)}$
$F02B\ 75/32^{(2006.01)}$    $F02D\ 15/02^{(2006.01)}$

(52) Cooperative Patent Classification (CPC):
**F02B 25/04; F02B 75/045; F02D 15/02;** F02B 75/32

(86) International application number:
**PCT/JP2018/039935**

(87) International publication number:
**WO 2019/083021 (02.05.2019 Gazette 2019/18)**

(54) **ENGINE SYSTEM**

MOTORSYSTEM

SYSTÈME DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2017 JP 2017207964**

(43) Date of publication of application:
**02.09.2020 Bulletin 2020/36**

(73) Proprietor: **IHI Corporation**
**Tokyo 135-8710 (JP)**

(72) Inventors:
• **MASUDA, Yutaka**
  **Tokyo 135-8710 (JP)**
• **HIROSE, Takayuki**
  **Tokyo 135-8710 (JP)**
• **YAMADA, Takayuki**
  **Tokyo 135-8710 (JP)**
• **NAKAJIMA, Hayato**
  **Tokyo 135-8710 (JP)**

(74) Representative: **TBK**
**Bavariaring 4-6**
**80336 München (DE)**

(56) References cited:
EP-A1- 3 098 416    EP-A1- 3 098 417
EP-A2- 2 687 707    WO-A1-2015/108138
WO-A1-2015/108178    WO-A1-2015/108182
JP-A- 2002 538 364    JP-A- 2003 517 535
JP-A- 2005 048 621    JP-A- 2014 020 375
JP-U- S63 164 535

## Description

Technical Field

The present disclosure relates to an engine system according to the preamble of claim 1.

Background Art

For example, Patent Document 1 discloses a large reciprocating piston combustion engine having a crosshead. The large reciprocating piston combustion engine of Patent Document 1 is a dual fuel engine capable of operating on both a liquid fuel such as heavy oil and a gas fuel such as natural gas. In the large reciprocating piston combustion engine of Patent Document 1, in order to correspond to both a compression ratio suitable for operation with liquid fuel and a compression ratio suitable for operation with gas fuel, a crosshead portion is provided with an adjustment mechanism for changing the compression ratio by moving a piston rod using hydraulic pressure.

Patent Documents 2 and 3 each disclose a generic engine system according to the preamble of claim 1.

Document of Related Art

Patent Document

[Patent Document 1] EP 2 687 707 A2
[Patent Document 2] EP 3 098 416 A1
[Patent Document 3] EP 3 098 417 A1

Summary of Invention

Technical Problem

The above-described engine system known from Patent Document 1 with a compression adjustment device that changes the compression ratio changes the position of the piston rod in the movement direction thereof, thereby changing the bottom dead center position and the top dead center position of the piston and adjusting the compression ratio. Such an adjustment of the compression ratio is performed by a control device of the engine system based on an operation of an operator or the like. However, in some cases, the control device cannot acquire the position of the piston rod, and it may be difficult to accurately adjust the compression ratio.

The present disclosure is made in view of the above-described problems and an object thereof is to accurately acquire the compression ratio in an engine system with a variable compression device.

Solution to Problem

The object is achieved by an engine system having the features of claim 1. Further advantageous developments of the present invention are set out in the dependent claims.

An engine system of the present invention includes: a variable compression device including a fluid chamber in which a piston rod connected to a piston is moved in a direction to increase a compression ratio by a pressurized working fluid being supplied thereto; a detection device that outputs a signal including positional information of the piston; and a position acquisition device that acquires a position of the piston based on the signal.

According to the present invention, at least part of the detection device is provided in a cylinder liner inside which the piston slides, and the detection device is configured to detect a position in a sliding direction of the piston.

Preferably, the detection device includes a detection target provided in the piston and a detector provided in the cylinder liner.

More preferably, a plurality of the detection targets is provided on a sliding surface of the piston in a circumferential direction.

Preferably, the detector is provided at a position farther than a scavenging port of the cylinder liner with respect to a combustion chamber in the sliding direction of the piston.

Effects of Invention

According to the present disclosure, the detection device outputs a signal including the positional information in the movement direction (the sliding direction) of the piston, the position acquisition device acquires the positional information of the piston, and a control unit provided in the engine system controls, based on the positional information, a pressure-increasing mechanism that adjusts the pressure in the fluid chamber. Accordingly, the control unit can acquire the accurate position of the piston in the movement direction and constantly monitor whether the position matches a target position of the piston. Further, since the control unit accurately acquires the position of the piston, the control unit can more stably control the variable compression device.

Brief Description of Drawings

FIG. 1 is a cross-sectional view of an engine system of an embodiment of the present disclosure.
FIG. 2 is a schematic cross-sectional view showing part of the engine system of the embodiment of the present disclosure.
FIG. 3 is an enlarged schematic cross-sectional view showing part of the engine system of the embodiment of the present disclosure.

Description of Embodiments

Hereinafter, embodiments of an engine system 100 of the present disclosure will be described with reference to the drawings.

(First Embodiment)

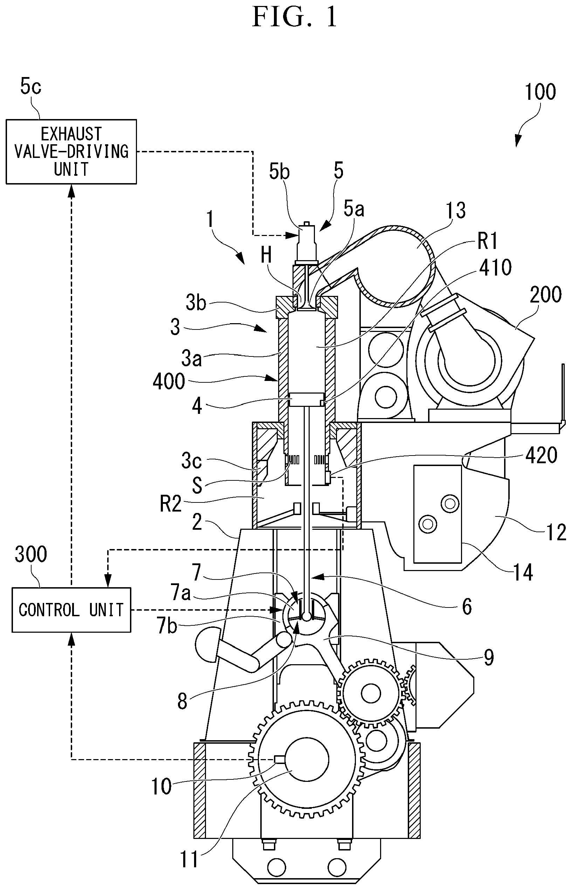

An engine system 100 of this embodiment is mounted on, for example, a ship such as a large tanker and includes an engine 1, a turbocharger 200, a control unit 300 (a position acquisition device), and a position detector 400 (a detection device) as shown in FIG. 1. Additionally, in this embodiment, the turbocharger 200 is regarded as an auxiliary machine and is described as a form separated from the engine 1 (a main machine). However, the turbocharger 200 can be configured as part of the engine 1. Additionally, the turbocharger 200 is not an essential component for the engine system 100 of this embodiment and may not be provided in the engine system 100.

FIG. 1 is a longitudinal cross-sectional view taken along the central axis of a cylinder liner 3a, which will be described later and is provided in the engine system 100. In FIG. 1, an installation side of an exhaust valve unit 5 to be described later may be referred to as an upper side, and an installation side of a crank shaft 11 to be described later may be referred to as a lower side. A diagram viewed in the central axis direction of the cylinder liner 3a may be referred to as a plan view.

The engine 1 is a multi-cylinder uniflow scavenging diesel engine and is a dual fuel engine capable of performing a gas operation mode in which gas fuel such as natural gas is burned together with liquid fuel such as heavy oil and a diesel operation mode in which liquid fuel such as heavy oil is burned. In the gas operation mode, only gas fuel may be burned. The engine 1 includes a frame 2, a cylinder portion 3, a piston 4, the exhaust valve unit 5, a piston rod 6, a crosshead 7, a hydraulic unit 8 (a pressure-increasing mechanism), a connecting rod 9, a crank angle sensor 10, the crank shaft 11, a scavenging reservoir 12, an exhaust reservoir 13, and an air cooler 14. Further, a cylinder is constituted of the cylinder portion 3, the piston 4, the exhaust valve unit 5, and the piston rod 6.

The frame 2 is a rigid member that supports the entire engine 1 and accommodates the crosshead 7, the hydraulic unit 8, and the connecting rod 9. Further, the frame 2 is configured such that a crosshead pin 7a (to be described later) of the crosshead 7 is movable in a reciprocating manner therein.

The cylinder portion 3 includes the cylinder liner 3a, a cylinder head 3b, and a cylinder jacket 3c. The cylinder liner 3a is a cylindrical member and has a sliding surface with the piston 4 formed on the inside (the inner peripheral surface) thereof. A space surrounded by the inner peripheral surface of the cylinder liner 3a and the piston 4 constitutes a combustion chamber R1. Further, a plurality of scavenging ports S are provided in a lower portion of the cylinder liner 3a. The scavenging ports S are openings arranged along the peripheral surface of the cylinder liner 3a and provide communication between a scavenging chamber R2 inside the cylinder jacket 3c and the inside of the cylinder liner 3a. The cylinder head 3b is a cover member that is provided in the upper end portion of the cylinder liner 3a. The center portion of the cylinder head 3b in a plan view is provided with an exhaust port H, which is connected to the exhaust reservoir 13. The exhaust port H communicates with the exhaust reservoir 13. Further, the cylinder head 3b is provided with a fuel injection valve (not shown). Furthermore, a cylinder internal pressure sensor (not shown) is provided in the vicinity of the fuel injection valve of the cylinder head 3b. The cylinder internal pressure sensor detects a pressure inside the combustion chamber R1 and transmits the results to the control unit 300. The cylinder jacket 3c is a cylindrical member that is provided between the frame 2 and the cylinder liner 3a, in which the lower end portion of the cylinder liner 3a is inserted, and inside which the scavenging chamber R2 is formed. Further, the scavenging chamber R2 of the cylinder jacket 3c is connected to the scavenging reservoir 12.

The piston 4 is formed in a substantially columnar shape, is connected to the piston rod 6 to be described later, and is disposed inside the cylinder liner 3a. Further, an outer peripheral surface of the piston 4 is provided with piston rings (not shown), and a gap between the piston 4 and the cylinder liner 3a is sealed by the piston rings. The piston 4 slides inside the cylinder liner 3a together with the piston rod 6 due to a change in pressure in the combustion chamber R1. The sliding direction of the piston 4 is the same as the central axis direction of the cylinder liner 3a (the up-down direction of FIG. 1).

The exhaust valve unit 5 includes an exhaust valve 5a, an exhaust valve cage 5b, and an exhaust valve-driving unit 5c. The exhaust valve 5a is provided inside the cylinder head 3b and blocks the exhaust port H of the cylinder portion 3 by the exhaust valve-driving unit 5c. The exhaust valve cage 5b is a cylindrical casing that accommodates the end portion of the exhaust valve 5a. The exhaust valve-driving unit 5c is an actuator that moves the exhaust valve 5a in a direction parallel with the stroke direction (the sliding direction) of the piston 4.

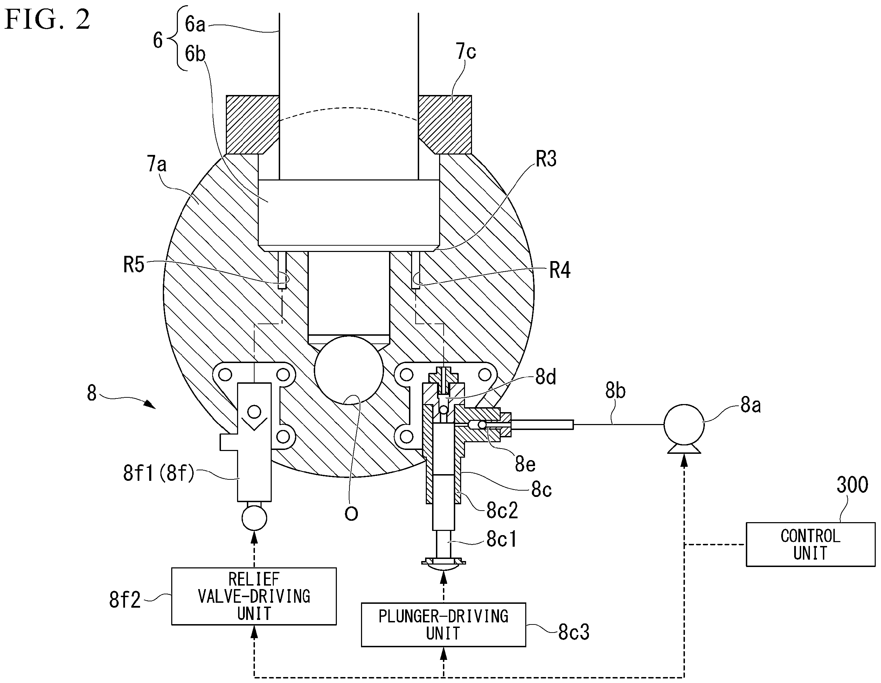

The piston rod 6 is an elongated member of which one end (upper end) is connected to the piston 4 and the other end (lower end) is connected to the crosshead pin 7a. The piston rod 6 of this embodiment is a bar-shaped member. The end portion (the lower end portion) of the piston rod 6 is inserted into the crosshead pin 7a and is connected to the crosshead pin 7a such that the connecting rod 9 is rotatable. Further, the piston rod 6 includes a rod-shaped main body 6a extending in the up-down direction and a large-diameter portion 6b formed by setting the diameter of part of the end portion of the piston rod 6 close to the crosshead pin 7a to be greater than that of the main body 6a (refer to FIG. 2). The large-diameter portion 6b is also formed in a columnar shape.

As shown in FIGS. 1 and 2, the crosshead 7 includes the crosshead pin 7a, a guide shoe 7b, and a cover member 7c. Additionally, in FIG. 2, an installation side of the piston rod 6 is the upper side, and an installation side of a plunger pump 8c or a relief valve 8f, which will be described later, is the lower side. The crosshead pin 7a is a columnar member that movably connects the piston rod 6 and the connecting rod 9, and a hydraulic chamber R3 (a fluid chamber), to and from which working oil (working fluid) is supplied and discharged, is provided in an insertion space (an insertion recess) of the crosshead pin 7a into which the end portion (the large-diameter portion 6b) of the piston rod 6 is inserted. The central axis of the crosshead pin 7a extends in a direction orthogonal to the sliding direction of the piston 4. The insertion recess is provided in the upper portion of the crosshead pin 7a to open upward. The outer peripheral surface of the large-diameter portion 6b liquid-tightly contacts an inner peripheral surface of the insertion recess. An outlet hole O is provided in a portion of the crosshead pin 7a below the center thereof and penetrates in the axial direction through the crosshead pin 7a. The outlet hole O is an opening from which cooling oil having passed through a cooling flow path (not shown) of the piston rod 6 is discharged. Further, the crosshead pin 7a is provided with a supply flow path R4 that connects the hydraulic chamber R3 and the plunger pump 8c to be described later and a relief flow path R5 that connects the hydraulic chamber R3 and the relief valve 8f to be described later.

The guide shoe 7b is a member that rotatably supports the crosshead pin 7a and moves on a guide rail (not shown) in the stroke direction of the piston 4 together with the crosshead pin 7a. The guide shoe 7b is provided inside the frame 2. Since the guide shoe 7b moves along the guide rail, the movement of the crosshead pin 7a in a direction other than a linear direction parallel with the stroke direction of the piston 4 is regulated. The rotational motion of the crosshead pin 7a around the central axis thereof is also regulated. The cover member 7c is an annular member that is fixed to the upper portion of the crosshead pin 7a and into which the end portion of the piston rod 6 is inserted. The cover member 7c is provided in the peripheral edge of the opening of the insertion recess of the crosshead pin 7a. The inner diameter of the cover member 7c is equal to the outer diameter of the main body 6a of the piston rod 6 and is less than the outer diameter of the large-diameter portion 6b. The large-diameter portion 6b is movable in the up-down direction inside the insertion recess. A space between the inner surface of the insertion recess and the lower surface of the large-diameter portion 6b constitutes the hydraulic chamber R3. The crosshead 7 having the above configuration transmits the linear motion of the piston 4 to the connecting rod 9.

As shown in FIG. 2, the hydraulic unit 8 includes a supply pump 8a, a swing pipe 8b, the plunger pump 8c, a first check valve 8d and a second check valve 8e connected to the plunger pump 8c, and the relief valve 8f. Further, the piston rod 6, the crosshead 7, and the hydraulic unit 8 function as a variable compression device of the present disclosure.

The supply pump 8a is a pump that, based on instructions from the control unit 300, pressurizes working oil supplied from a working oil tank (not shown) and supplies the working oil to the plunger pump 8c. The supply pump 8a is driven by the electric power of a battery of the ship and can operate before the liquid fuel is supplied to the combustion chamber R1. The swing pipe 8b is a pipe that connects the supply pump 8a to the plunger pump 8c of each cylinder and is swingable between the plunger pump 8c moving together with the crosshead pin 7a and the fixed supply pump 8a.

The plunger pump 8c is fixed to the crosshead pin 7a and includes a bar-shaped plunger 8c1, a cylinder 8c2 that accommodates the plunger 8c1 such that the plunger 8c1 is slidable therein, and a plunger-driving unit 8c3. In the plunger pump 8c, the plunger 8c1 is connected to the plunger-driving unit 8c3, thereby slides inside the cylinder 8c2, pressurizes working oil and supplies the working oil to the hydraulic chamber R3. Further, a working oil discharge-side opening provided in an end portion of the cylinder 8c2 is provided with the first check valve 8d, and a working oil suction-side opening provided on a side peripheral surface of the cylinder 8c2 is provided with the second check valve 8e. The plunger-driving unit 8c3 is connected to the plunger 8c1 and moves the plunger 8c1 in a reciprocating manner based on instructions from the control unit 300.

The first check valve 8d is configured to be closed when a valve body is pushed inward of the cylinder 8c2 by a pushing member (not shown) and prevents the working oil supplied to the hydraulic chamber R3 from reversely flowing toward the cylinder 8c2. Further, the first check valve 8d is opened by the valve body being pushed by the working oil when the pressure of the working oil inside the cylinder 8c2 becomes equal to or higher than the pushing force (the valve-opening pressure) of the pushing member of the first check valve 8d. The second check valve 8e is pushed outward of the cylinder 8c2 by a pushing member (not shown) and prevents the working oil supplied to the cylinder 8c2 from reversely flowing toward the supply pump 8a. Further, the second check valve 8e is opened by the valve body being pushed by the working oil when the pressure of the working oil supplied from the supply pump 8a becomes equal to or higher than the pushing force (the valve-opening pressure) of the pushing member of the second check valve 8e. Additionally, the valve-opening pressure of the first check valve 8d is higher than that of the second check valve 8e, and the first check valve 8d is not opened by the pressure of the working oil supplied from the supply pump 8a during a normal operation in which the operation is performed at a predetermined compression ratio.

The relief valve 8f is provided in the crosshead pin 7a and includes a main body 8f1 and a relief valve-driving unit 8f2. The main body 8f1 is a valve that is connected to the working oil tank (not shown) and the hydraulic chamber R3 through the relief flow path R5. The relief valve-driving unit 8f2 is connected to the valve body of the main body 8f1 and opens and closes the main body 8f1 based on instructions from the control unit 300. When the relief valve 8f is opened by the relief valve-driving unit 8f2, the working oil stored in the hydraulic chamber R3 is returned to the working oil tank.

As shown in FIG. 1, the connecting rod 9 is an elongated member that is connected to the crosshead pin 7a and is connected to the crank shaft 11. The connecting rod 9 converts the linear motion of the piston 4 transmitted to the crosshead pin 7a into rotational motion. The crank angle sensor 10 is a sensor for measuring a crank angle of the crank shaft 11 and transmits a crank pulse signal for calculating the crank angle to the control unit 300.

The crank shaft 11 is an elongated member that is connected to the connecting rod 9 provided in the cylinder and is rotated by the rotational motion transmitted by each connecting rod 9 so as to transmit motive power to, for example, a screw or the like. The scavenging reservoir 12 is provided between the cylinder jacket 3c and the turbocharger 200, and air pressurized by the turbocharger 200 flows into the scavenging reservoir 12. Further, the air cooler 14 is provided inside the scavenging reservoir 12. The exhaust reservoir 13 is a tubular member that is connected to the exhaust port H of each cylinder and is connected to the turbocharger 200. A gas discharged from the exhaust port H is temporarily stored in the exhaust reservoir 13 and is supplied to the turbocharger 200 while its pulsation is limited. The air cooler 14 is a device that cools air inside the scavenging reservoir 12.

The turbocharger 200 is a device that pressurizes air sucked from an intake port (not shown) by a turbine rotated by a gas discharged from the exhaust port H and supplies the air to the combustion chamber R1 through the scavenging reservoir 12, the air cooler 14, and the scavenging chamber R2.

The control unit 300 is a computer that controls a fuel supply amount or the like based on an operation or the like of an operator of the ship. The control unit 300 includes a CPU (Central Processing Unit), a memory such as a RAM (Random Access Memory) or a ROM (Read Only Memory), and a storage device such as a SSD (Solid State Drive) or a HDD (Hard Disk Drive). The control unit 300 is connected to the position detector 400 by a wire. Additionally, the control unit 300 may be configured to perform wireless communication of information with the position detector 400. Further, the control unit 300 changes the compression ratio of the combustion chamber R1 by controlling the hydraulic unit 8. Specifically, the control unit 300 acquires the positional information of the piston rod 6 based on a signal from the position detector 400, controls the plunger pump 8c, the supply pump 8a, and the relief valve 8f, and adjusts the amount of the working oil in the hydraulic chamber R3, thereby changing the position (the position in the sliding direction) of the piston rod 6 and changing the compression ratio.

Additionally, the control unit 300 of this embodiment has the function of the position acquisition device of the present disclosure as well as the function of controlling the operation of the engine 1 by, for example, adjusting fuel to be supplied to the engine 1. However, a control device corresponding to the position acquisition device of the present disclosure other than the control unit 300 may be provided.

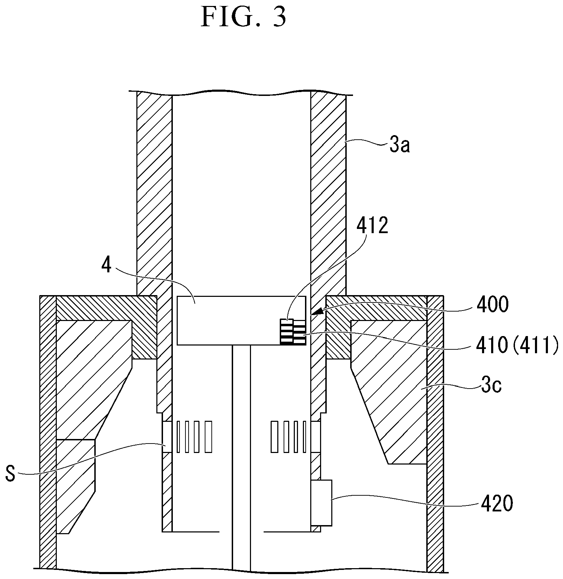

As shown in FIGS. 1 and 3, the position detector 400 includes a detection target 410 and a detector 420. The detection target 410 includes two uneven portions 411 and 412. The uneven portions 411 and 412 are provided on a lower end side of the sliding surface of the piston 4 and each of them includes a plurality of recesses and protrusions formed at equal intervals in the sliding direction of the piston 4. That is, the widths in the sliding direction of the recesses and the protrusions constituting the uneven portions 411 and 412 are all equal. Further, the uneven portions 411 and 412 are provided adjacently in the circumferential direction of the piston. Furthermore, the uneven portions 411 and 412 are provided such that uneven portions equal to each other are arranged and the positions of the uneven portions are shifted by half the width of each recess in the sliding direction of the piston 4. The shift amount of the positions of the uneven portions is not limited to half the width of each recess but may be set arbitrarily according to the resolution of the detector. Additionally, the detection target 410 is provided on a lower side (the side close to the piston rod 6) of the piston rings (not shown) provided in the piston 4. Accordingly, the detection target 410 is less affected by lubricating oil on the sliding surface of the piston 4.

The detector 420 is provided on a lower end side of the inner peripheral surface of the cylinder liner 3a, which is a position farther than the scavenging port S with respect to the combustion chamber R1, and at the same position as or on the outside of the cylinder liner wall surface. In this embodiment, the detector is embedded in and fixed to the lower end side of the inner peripheral surface of the cylinder liner 3a. The inner surface of the position detector 400 in the radial direction of the cylinder liner 3a may be provided so as to be flush with the inner peripheral surface of the cylinder liner 3a. The detector 420 is a sensor that generates an electric signal (a signal including positional information of the piston rod 6 (piston 4)) in accordance with a change in distance from the surface of the detection target 410 as two detection targets 410 move. The detector 420 includes, for example, photoelectric sensors, laser sensors, and proximity sensors such as inductive and capacitance sensors. Accordingly, the detector 420 can detect which one of the recesses and the protrusions of the uneven portions 411 and 412 faces the detector and thus detect the position of the piston 4 in the sliding direction.

The engine system 100 having the above configuration is a device that ignites and explodes fuel injected into the combustion chamber R1 from the fuel injection valve (not shown), thereby slides the piston 4 inside the cylinder liner 3a and rotates the crank shaft 11. In detail, fuel supplied to the combustion chamber R1 is mixed with air having flowed thereinto from the scavenging port S, thereafter is compressed by the piston 4 moving toward the top dead center, and spontaneously ignites when the temperature thereof rises. Further, in a case of liquid fuel, the fuel is vaporized and spontaneously ignites when the temperature rises in the combustion chamber R1.

Then, the fuel in the combustion chamber R1 spontaneously ignites and suddenly expands so that a pressure is applied to the piston 4 toward the bottom dead center. Accordingly, the piston 4 moves toward the bottom dead center so that the piston rod 6 is moved together with the piston 4 and the crank shaft 11 is rotated through the connecting rod 9. Further, when the piston 4 is moved to the bottom dead center, pressurized air flows from the scavenging port S into the combustion chamber R1. At this time, the exhaust port H is opened by the exhaust valve unit 5 operating, and the exhaust gas inside the combustion chamber R1 is pushed out to the exhaust reservoir 13 by the pressurized air.

In a case where the compression ratio is increased, the supply pump 8a is driven by the control unit 300 and working oil is supplied to the plunger pump 8c. Then, the control unit 300 drives the plunger pump 8c so as to pressurize the working oil up to a pressure that can lift the piston rod 6 and supplies the working oil to the hydraulic chamber R3. The end portion (the large-diameter portion 6b) of the piston rod 6 is lifted by the pressure of the working oil in the hydraulic chamber R3 and the top dead center position of the piston 4 is shifted upward (toward the exhaust port H) with this lift.

In a case where the compression ratio is decreased, the relief valve 8f is driven by the control unit 300 so that the hydraulic chamber R3 communicates with the working oil tank (not shown). Then, the weight of the piston rod 6 is applied to the working oil in the hydraulic chamber R3 so that the working oil in the hydraulic chamber R3 is pushed out to the working oil tank through the relief valve 8f. Accordingly, the amount of the working oil in the hydraulic chamber R3 decreases, the piston rod 6 is moved downward (toward the crank shaft 11), and the top dead center position of the piston 4 is shifted downward with this movement.

Next, a method of adjusting the position of the piston rod 6 of this embodiment will be described.

When the piston 4 is moved with the movement of the piston rod 6, the recesses and protrusions of the detection target 410 are relatively moved so that the distance from the detection target 410 detected by the detector 420 changes. The detector 420 outputs a change in the recesses and protrusions, that is, a change in the relative distance from the surface of the detection target 410, as an electric signal to the control unit 300. Additionally, since two detection targets 410 are arranged so as to be shifted by half the width of each recess and the magnetic field of each detection target 410 is detected, the position detection resolution of the detector 420 has a length corresponding to half the width of each of the recesses and protrusions in the sliding direction of the piston 4.

The control unit 300 receives an electric signal of the detector 420 and calculates (acquires) the position of the piston 4 based on the electric signal. Then, the control unit 300 adjusts the position of the piston rod 6 by controlling the hydraulic unit 8 based on the position of the piston 4.

According to the engine system 100 of this embodiment, the position detector 400 outputs a signal including positional information of the piston 4 in the movement direction, and the control unit 300 acquires the positional information of the piston 4. Accordingly, the control unit 300 can accurately adjust the position of the piston 4 in the movement direction by constantly monitoring whether the position of the piston 4 in the movement direction matches a target position of the piston 4. Further, the control unit 300 can more stably control the variable compression device by accurately acquiring the position of the piston 4.

Furthermore, in the engine system 100 of this embodiment, the detector 420 is embedded in the cylinder liner 3a that does not move relative to the frame 2. Accordingly, the detector 420 and the control unit 300 can be connected to each other by wire. Thus, it is not necessary to provide a wireless transmission device such as a telemeter, and the installation operation is easy.

Further, in the engine system 100 of this embodiment, two detection targets 410 are provided so as to be shifted by a half wavelength in the sliding direction of the piston 4. Since a plurality of detection targets 410 are provided, the detector 420 can reliably detect the detection target 410. Further, since it is possible to detect the position of the piston 4 with the minimum resolution corresponding to the length of half the width of recess or protrusion in the sliding direction of the piston 4, the position of the piston 4 can be more accurately detected.

Further, in this embodiment, the detector 420 is provided at a position farther than the scavenging port S with respect to the combustion chamber R1. Accordingly, the influence of heat and pressure in the combustion chamber R1 on the detector 420 can be reduced.

(Pressure calculation)

Another way of establishing piston position, not included in the invention presented in this document, would be by using pressure. Herein mainly the same components as those above will be represented by the same reference signs, and descriptions thereof will be omitted. An engine system 100 according to this does not include the position detector 400. In this configuration, a control unit 300 (a position acquisition device) acquires the position of the piston 4 by calculating an actual compression ratio based on the internal pressure of the combustion chamber R1 calculated from a signal from a cylinder internal pressure sensor (a detection device, not shown).

If the cylinder internal pressure when the piston 4 is located at the bottom dead center is denoted by $P_0$ and the cylinder internal pressure when the piston 4 is located at the top dead center is denoted by $P_1$, the compression ratio $\varepsilon$ is expressed by Expression 1 below. Further, k denotes a polytropic index.

$$\varepsilon = \left(\frac{P_1}{P_0}\right)^{\frac{1}{k}} \qquad (1)$$

The control unit 300 calculates the compression ratio of the cylinder portion 3 based on Expression 1 above from a signal input from the cylinder internal pressure sensor. Further, the control unit 300 calculates the position of the piston 4 from the calculated compression ratio.

According to the engine system 100 of this alternative control system, which is not a part of the invention, the position of the piston 4 is acquired based on the cylinder internal pressure. Accordingly, the control unit 300 can accurately adjust the position of the piston 4 in the movement direction by constantly monitoring whether the position of the piston 4 in the movement direction matches a target position of the piston 4. Further, the control unit 300 can more stably control the variable compression device by accurately acquiring the position of the piston 4.

The position detector according to the invention 400 includes the detection target 410 provided in the piston 4 and the detector 420 provided in the cylinder liner 3a.

The position detector according to the invention 400 includes a plurality of position detectors provided on a sliding surface of the piston 4 in the circumferential direction.

The detector 420 is provided at a position farther than the scavenging port S of the cylinder liner 3a with respect to the combustion chamber R1 in the sliding direction of the piston 4. In other words, the detector 420 is provided such that the scavenging port S of the cylinder liner 3a is positioned between the detector 420 and the combustion chamber R1 in the sliding direction of the piston 4.

Hereinbefore, the present disclosure have been described with reference to the drawings, but the present disclosure is not limited to the above-described embodiments. The shapes, combinations, and the like of the components shown in the above-described embodiments are merely examples, and can be variously changed based on design requirements and the like within the scope of the appended claims.

In the above-described embodiment, the position detector 400 acquires the position of the piston 4 by detecting the recesses and protrusions, but the present disclosure is not limited thereto. For example, the position detector 400 may include a detection target 410 in which magnetic members are arranged at equal intervals in the sliding direction of the piston 4 and a detector 420 (magnetic sensor) that detects a change in the magnetic field.

Further, in a case where the detector 420 of the position detector 400 is a sensor (a proximity sensor or the like) capable of detecting the lower end or the like of the piston 4, only the detector 420 (part of the position detector 400) may be provided in the cylinder liner 3a.

Further, the installation area, the position, and the number of the detection target 410 are not limited to the above-described embodiments. The detection target 410 may be provided at each of three or more positions or only one position. Furthermore, a plurality of detectors 420 may be provided, and a plurality of detection targets 410 may be provided at positions facing each other (the positions facing each other in a radial direction of the cylinder liner 3a) between which the center of the piston 4 (the center of the piston 4 in the radial direction) is disposed. In this case, the inclination of the piston 4 with respect to the sliding direction can also be detected by increasing the position detection resolution of the detection target 410 and the detector 420.

Industrial Applicability

The present disclosure can be used for an engine system with a variable compression device including a fluid chamber in which a piston rod connected to a piston is moved in a direction to increase a compression ratio by a pressurized working fluid being supplied thereto.

Description of Reference Signs

1 Engine
2 Frame
3 Cylinder portion
3a Cylinder liner
3b Cylinder head
3c Cylinder jacket
4 Piston
5 Exhaust valve unit
5a Exhaust valve
5b Exhaust valve cage

5c Exhaust valve-driving unit
6 Piston rod
7 Crosshead
7a Crosshead pin
7b Guide shoe
7c Cover member
8 Hydraulic unit
8a Supply pump
8b Swing pipe
8c Plunger pump
8c1 Plunger
8c2 Cylinder
8c3 Plunger-driving unit
8d First check valve
8e Second check valve
8f Relief valve
8f1 Main body
8f2 Relief valve-driving unit
9 Connecting rod
10 Crank angle sensor
11 Crank shaft
12 Scavenging reservoir
13 Exhaust reservoir
14 Air cooler
100 Engine system
200 Turbocharger
300 Control unit (position acquisition device)
400 Position detector (detection device)
410 Detection target
411 Uneven portion
412 Uneven portion
420 Detector
H Exhaust port
O Outlet hole
R1 Combustion chamber
R2 Scavenging chamber
R3 Hydraulic chamber
R4 Supply flow path
R5 Relief flow path
R6 Auxiliary flow path
S Scavenging port

**Claims**

1. An engine system (100) comprising:

   a variable compression device (6, 7, 8) including a fluid chamber (R3) in which a piston rod (6) is moved in a direction to increase a compression ratio by a pressurized working fluid being supplied thereto, an upper end of the piston rod (6) being connected to a piston (4) and a lower end of the piston rod (6) being connected to a crosshead pin (7a) of a cross head (7) such that a connecting rod (9) is rotatable;
   a detection device (400) that outputs a signal including positional information of the piston (4);
   and
   a position acquisition device (300) that acquires a position of the piston (4) based on the signal, **characterized in that**
   at least part of the detection device (400) is provided in a cylinder liner (3a) inside which the piston (4) slides, and the detection device (400) is configured to detect a position in a sliding direction of the piston (4), and that
   the position acquisition device (300) controls a plunger pump (8c), a supply pump (8a), and a relief valve (8f), adjusts an amount of a working oil in the fluid chamber (R3), thereby changing a position of the piston rod (6) in a sliding direction of the piston rod (6) and changing the compression ratio.

2. The engine system (100) according to claim 1, wherein the detection device (400) includes a detection target (410) provided in the piston (4) and a detector (420) provided in the cylinder liner (3a).

3. The engine system (100) according to claim 2, wherein a plurality of the detection targets (410) is provided on a sliding surface of the piston (4) in a circumferential direction.

4. The engine system (100) according to claim 2 or 3, wherein the detector (410) is provided at a position farther than a scavenging port (S) of the cylinder liner (3a) with respect to a combustion chamber (R1) in the sliding direction of the piston (4).

**Patentansprüche**

1. Maschinensystem (100) mit:

   einer variablen Kompressionsvorrichtung (6, 7, 8), die eine Fluidkammer (R3) hat, in der durch ein mit Druck beaufschlagtes Arbeitsfluid, das zu dieser zugeführt wird, eine Kolbenstange (6) in einer Richtung bewegt wird, um ein Kompressionsverhältnis zu erhöhen, wobei ein oberes Ende der Kolbenstange (6) mit einem Kolben (4) verbunden ist und ein unteres Ende der Kolbenstange (6) mit einem Kreuzkopfstift (7a) eines Kreuzkopfs (7) verbunden ist, derart, dass eine Verbindungsstange (9) drehbar ist;
   einer Erfassungsvorrichtung (400), die ein Signal ausgibt, das eine Positionsinformation des Kolbens (4) umfasst; und
   einer Positionserlangungsvorrichtung (300), die eine Position des Kolbens (4) basierend auf dem Signal erlangt,
   **dadurch gekennzeichnet, dass**
   wenigstens ein Teil der Erfassungsvorrichtung (400) in einer Zylinderlaufbuchse (3a), in der der Kolben (4) gleitet, vorgesehen ist und die Erfassungsvorrichtung (400) gestaltet ist, um eine Position in einer Gleitrichtung des Kolbens (4) zu erfassen, und dadurch, dass die Positionserlangungsvorrichtung (300) eine Kolbenpumpe (8c), eine Zufuhrpumpe (8a) und ein Entlastungsventil (8f) steuert und eine Menge eines Arbeitsöls in der Fluidkammer (R3) einstellt, wodurch eine Position der Kolbenstange (6) in einer Gleitrichtung der Kolbenstange (6) geändert wird und das Kompressionsverhältnis geändert wird.

2. Maschinensystem (100) nach Anspruch 1, wobei die Erfassungsvorrichtung (400) ein Erfassungsziel (410), das in dem Kolben (4) vorgesehen ist, und eine Erfassungseinrichtung (420) umfasst, die in der Zylinderlaufbuchse (3a) vorgesehen ist.

3. Maschinensystem (100) nach Anspruch 2, wobei eine Vielzahl der Erfassungsziele (410) an einer Gleitfläche des Kolbens (4) in einer Umfangsrichtung vorgesehen ist.

4. Maschinensystem (100) noch Anspruch 2 oder 3, wobei die Erfassungseinrichtung (410) bei einer Position weiter weg als ein Spülanschluss (S) der Zylinderlaufbuchse (3a) mit Bezug auf eine Brennkammer (R1) in der Gleitrichtung des Kolbens (4) vorgesehen ist.

**Revendications**

1. Système de moteur (100) comprenant :
un dispositif de compression variable (6, 7, 8) incluant une chambre de fluide (R3) dans laquelle une tige de piston (6) est déplacée dans une direction pour augmenter un rapport de compression par un fluide de travail sous pression qui lui est fourni, une extrémité supérieure de la tige de piston (6) étant reliée à un piston (4) et une extrémité inférieure de la tige de piston (6) étant reliée à un tourillon de crosse (7a) d'une crosse (7) de telle sorte qu'une tige de liaison (9) est rotative ;

un dispositif de détection (400) qui émet un signal incluant des informations de position du piston (4) ; et
un dispositif d'acquisition de position (300) qui acquiert une position du piston (4) sur la base du signal, **caractérisé en ce que**
au moins une partie du dispositif de détection (400) est fournie dans une chemise de cylindre (3a) à l'intérieur de laquelle le piston (4) coulisse, et le dispositif de détection (400) est configuré pour détecter une position dans une direction de coulissement du piston (4), et **en ce que**

le dispositif d'acquisition de position (300) commande une pompe à piston plongeur (8c), une pompe d'alimentation (8a), et une soupape de surpression (8f), ajuste une quantité d'huile de travail dans la chambre de fluide (R3), changeant ainsi une position de la tige de piston (6) dans une direction de coulissement de la tige de piston (6) et changeant le rapport de compression.

2. Système de moteur (100) selon la revendication 1, dans lequel le dispositif de détection (400) inclut une cible de détection (410) fournie dans le piston (4) et un détecteur (420) fourni dans la chemise de cylindre (3a).

3. Système de moteur (100) selon la revendication 2, dans lequel une pluralité de cibles de détection (410) est fournie sur une surface de coulissement du piston (4) dans une direction circonférentielle.

4. Système de moteur (100) selon la revendication 2 ou 3,
dans lequel le détecteur (410) est fourni au niveau d'une position plus éloignée qu'un orifice de récupération (S) de la chemise de cylindre (3a) par rapport à une chambre de combustion (R1) dans la direction de coulissement du piston (4).

# FIG. 1

FIG. 2

EP 3 702 597 B1

## FIG. 3

**EP 3 702 597 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2687707 A2
- EP 3098416 A1
- EP 3098417 A1